# EUROPEAN PATENT APPLICATION

(11) **EP 4 592 850 A1**
(43) Date of publication of application: **30.07.2025**
(21) Application number: 23867923.7
(22) Date of filing: 14.08.2023
(51) Int. Cl.: G06F 11/36, G06F 21/57

(54) **SYSTEM, METHOD, AND PROGRAM FOR TESTING WEBSITE**

(30) Priority: 20.09.2022 JP 2022148858
(71) Applicant: AEYE SECURITY LAB INC., Tokyo 101-0054 (JP)
(72) Inventor: SUGIYAMA Toshiharu, Tokyo 101-0054 (JP); ANZAI Masato, Tokyo 101-0054 (JP)
(74) Representative: Viering, Jentschura & Partner mbB Patent- und Rechtsanwälte
(86) International application number: PCT/JP2023/029405
(87) International publication number: WO 2024/062798

(57) **Abstract**

A website inspection server 10 according to one embodiment of the present invention assists a user in inspecting a website. The server 10 provides, to a user who operates a user terminal 30 communicatively connected to the server 10 through a communication network 20, a website inspection service in which a website 22 specified by the user is inspected. The server 10 sets screen transitions for inspecting the website 22 to be inspected, and a predetermined screen for displaying information on the screen transitions displays an element included in a screen included in the screen transitions, a transition in response to selection of the element not being included in the screen transitions, as an addable element, a new transition in response to selection of the addable element being addable to the screen transitions. This allows the user to easily modify the set screen transitions.

## Description

### TECHNICAL FIELD

The present invention relates to a system, method, and program for inspecting a website.

### BACKGROUND ART

Various technologies for inspecting a website have been proposed. For example, Patent Literature 1 below discloses a technology that assists a user so that the user can test a website more easily. Specifically, this literature discloses that a set of input values for testing a website can be generated almost automatically by estimating rules for multiple input fields on the website, acquiring a set of input values corresponding to the estimated rules, extracting elements from the acquired set of input values one by one, and generating a set of elements to be inputted into the input fields.

### Citation List

### Patent Literature

[Patent Literature 1] Japanese Unexamined Patent Application Publication No. 2019-191689

### SUMMARY OF INVENTION

### Technical Problem

The above conventional technology can assist a user in generating input values for inspecting (testing) a website. However, inspection of a website requires setting not only input values but also a scenario for inspecting the website. For example, a practice of recording operations on a web browser manually performed by a user and setting screen transitions as an inspection scenario has been performed. However, there is room for improvement on a modification (for example, addition of some screens, etc.) to the set screen transitions.

One object of embodiments of the present invention is to assist a user in inspecting a website. Other objects of the embodiments of the present invention are clarified by referring to the entire present specification.

### Solution to Problem

A system according to one embodiment of the present invention is a system that aims to inspect a website and includes one or more computer processors. The one or more computer processors perform a step of setting screen transitions for inspecting a target website, the screen transitions including a transition to a second screen in response to selection of a first element included in a first screen, a step of inspecting the target website in accordance with the screen transitions, and a step of outputting a predetermined screen displaying information on the screen transitions. The predetermined screen displays a second element included in the first screen, a transition to a third screen in response to selection of the second element not being included in the screen transitions, as an addable element, a new transition in response to selection of the addable element being addable to the screen transitions.

A method according to one embodiment of the present invention is a method that aims to inspect a website and is performed by one or more computers. The method includes a step of setting screen transitions for inspecting a target website, the screen transitions including a transition to a second screen in response to selection of a first element included in a first screen, a step of inspecting the target website in accordance with the screen transitions, and a step of outputting a predetermined screen displaying information on the screen transitions. The predetermined screen displays a second element included in the first screen, a transition to a third screen in response to selection of the second element not being included in the screen transitions, as an addable element, a new transition in response to selection of the addable element being addable to the screen transitions.

A program according to one embodiment of the present invention is a program for inspecting a website. The program causes one or more computers to perform a step of setting screen transitions for inspecting a target website, the screen transitions including a transition to a second screen in response to selection of a first element included in a first screen, a step of inspecting the target website in accordance with the screen transitions, and a step of outputting a predetermined screen displaying information on the screen transitions. The predetermined screen displays a second element included in the first screen, a transition to a third screen in response to selection of the second element not being included in the screen transitions, as an addable element, a new transition in response to selection of the addable element being addable to the screen transitions.

### Advantageous Effects of Invention

The various embodiments of the present invention assist the user in inspecting the website.

### BRIEF DESCRIPTION OF DRAWINGS

FIG. 1 is a configuration diagram schematically showing the configuration of a network including a website inspection server 10 according to one embodiment of the present invention.
FIG. 2 is a diagram illustrating information managed by an inspection management table 152.
FIG. 3 is a diagram illustrating information managed by a screen management table 154.
FIG. 4 is a diagram illustrating information managed by an element management table 156.
FIG. 5 is a flowchart illustrating a process that the website inspection server 10 performs when inspecting the vulnerability of a website.
FIG. 6 is a diagram illustrating a target site setting screen 50.
FIG. 7 is a flowchart illustrating a process that the website inspection server 10 performs when setting screen transitions for inspecting a website.
FIG. 8 is a diagram illustrating an inspection result list screen 60.
FIG. 9 is a diagram illustrating a visit result confirmation screen 70.
FIG. 10 is a diagram illustrating a screen transition diagram 200.
FIG. 11 is a diagram illustrating details of screen objects 202.
FIG. 12 is a diagram illustrating a revisit setting screen 80.
FIG. 13 is a diagram illustrating a screen shot screen 90.
FIG. 14 is a diagram illustrating an inspection result confirmation screen 210.

### DESCRIPTION of EMBODIMENTS

Now, an embodiment of the present invention will be described with reference to the drawings. In the drawings, the same or similar components are given the same reference signs.

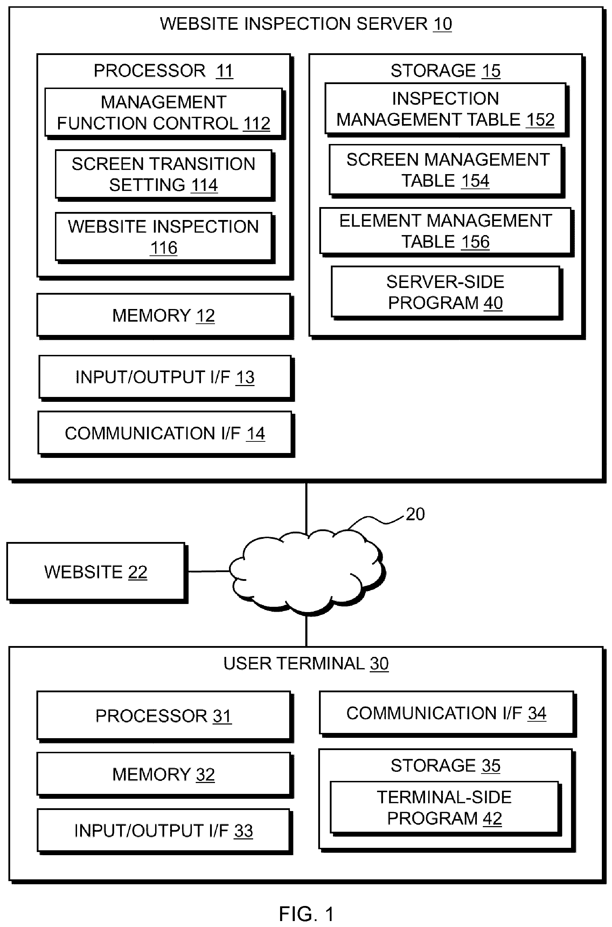

FIG. 1 is a configuration diagram schematically showing the configuration of a network including a website inspection server 10 according to one embodiment of the present invention. As shown, the server 10 is communicatively connected to a user terminal 30 through a communication network 20 such as the Internet. While FIG. 1 shows only one user terminal 30, the server 10 is communicatively connected to multiple user terminals 30. The website inspection server 10 provides, to a user who operates the user terminal 30, a website inspection service in which a website 22 specified by the user is inspected. The website inspection server 10 is an example of an apparatus that implements all or part of a system of the present invention.

First, the hardware configuration of the website inspection server 10 will be described. The website inspection server 10 consists of a general computer and, as shown in FIG. 1, includes a computer processor 11, main memory 12, an input/output I/F 13, a communication I/F 14, and storage 15. These components are electrically connected to each other through a bus (not shown).

The computer processor 11 consists of a CPU, GPU, or the like. It loads a program stored in the storage 15 or the like into the main memory 12 and executes various commands included in the program. The main memory 12 consists of, for example, DRAM or the like.

The input/output I/F 13 includes various input/output devices for exchanging information with an operator or the like. For example, the input/output I/F 13 includes an information input device such as a keyboard or a pointing device (e.g., a mouse, touchscreen, etc.), a sound input device such as a microphone, and an image input device such as a camera. The input/output I/F 13 also includes an image output device such as a display and a sound output device such as a speaker.

The communication I/F 14 is implemented as hardware such as a network adapter, any type of communication software, or a combination of these and is configured to perform wired or wireless communication through the communication network 20 or the like.

The storage 15 consists of, for example, a magnetic disk, a flash memory, or the like. The storage 15 is storing various programs including an operating system, various types of data, and the like. For example, as shown in FIG. 1, the storage 15 is storing an inspection management table 152 for managing information on individual inspections, a screen management table 154 for managing information on screens of a website to be inspected, and an element management table 156 for managing information on elements included in the screens (web pages). The storage 15 is also storing, for example, a server-side program 40 according to one embodiment of the present invention. The program 40 is a program for causing the server 10 to function as all or part of a system for providing a website inspection service. At least part of the server-side program 40 may be configured to be executed on the user terminal 30 side through a terminal-side program 42 (to be discussed later).

In the present embodiment, the website inspection server 10 may consist of multiple computers each having the above hardware configuration. For example, the server 10 consists of multiple server devices.

The website inspection server 10 thus configured functions as a web server and application server. That is, the website inspection server 10 performs various processes in response to a request from the user terminal 30 and transmits screen data (e.g., HTML data), control data, and the like corresponding to the results of the processes to the user terminal 30. Web pages or other screens based on the received data are outputted on the user terminal 30.

Next, the hardware configuration of the user terminal 30 will be described. The user terminal 30 consists of a general computer. As shown in FIG. 1, the user terminal 30 includes a computer processor 31, main memory 32, an input/output I/F 33, a communication I/F 34, and storage 35, and these components are electrically connected to each other through a bus (not shown).

The computer processor 31 consists of a CPU, GPU, or the like. It loads a program stored in the storage 35 or the like into the main memory 32 and executes various commands included in the program. The main memory 32 consists of, for example, DRAM or the like.

The input/output I/F 33 includes various input/output devices for exchanging information with an operator or the like. For example, the input/output I/F 33 includes an information input device such as a keyboard or a pointing device (e.g., a mouse, touchscreen, etc.), a sound input device such as a microphone, and an image input device such as a camera. The input/output I/F 33 also includes an image output device such as a display and a sound output device such as a speaker.

The communication I/F 34 is implemented as hardware such as a network adapter, any type of communication software, or a combination of these and is configured to perform wired or wireless communication through the communication network 20 or the like.

The storage 35 consists of, for example, a magnetic disk, flash memory, or the like. The storage 35 is storing various programs including an operating system, various types of data, and the like. The programs stored in the storage 35 can be downloaded and installed from an application market or the like. The storage 35 is also storing the above-mentioned terminal-side program 42. The program 42 consists of a web browser or any other application (for example, a user terminal-side application for the website inspection service of the present embodiment, etc.) and may be configured to execute at least part of the server-side program 40, as described above.

In the present embodiment, the user terminal 30 may consist of a smartphone, tablet terminal, personal computer, or the like.

The user who operates the user terminal 30 thus configured is able to use the website inspection service provided by the server 10 by communicating with the server 10 through the terminal-side program 42 installed in the storage 35 or the like.

Next, the functions of the website inspection server 10 configured as described above will be described. As shown in FIG. 1, the computer processor 11 of the server 10 is configured to function as a management function control unit 112, a screen transition setting unit 114, and a website inspection unit 116 by executing commands included in a program (for example, at least part of the server-side program 40) loaded into the main memory 12.

The management function control unit 112 is configured to perform various processes related to the control of the management functions of the website inspection service. For example, the management function control unit 112 transmits screen data, control data, and the like of various screens related to the management functions to the user terminal 30, performs various processes in response to input made by the user through the screens outputted on the user terminal 30, and transmits screen data, control data, and the like corresponding to the results of the processes to the user terminal 30. The management functions controlled by the management function control unit 112 include, for example, login processing (user authentication), billing control, user account management, and the like.

The screen transition setting unit 114 is configured to perform various processes related to the setting of screen transitions for inspecting the website 22. The screen transitions include, for example, a transition to a second screen in response to selection of a first element included in a first screen corresponding to a specific web page constituting a part of the website 22. Such an element can be said to be an element that causes a transition in response to selection of the element among screen elements constituting the web page. Examples of such an element include various kinds of objects (buttons, images, text, and the like) on which a link, script, or the like is set. The screen transitions can be said to be the scenario of the inspection and can represent the range of the inspection.

The website inspection unit 116 is configured to perform various processes related to the inspection of the website 22. In the present embodiment, the website inspection unit 116 is configured to inspect the website 22 in accordance with the set screen transitions. For example, the website inspection unit 116 starts the web browser, accesses a specific web page (for example, a web page corresponding to a screen serving as the starting point of the screen transitions, etc.) of the website 22, and then selects elements included in each screen in accordance with the set screen transitions to make transitions to the corresponding screens. The website inspection unit 116 then transmits various requests for inspecting each screen for predetermined inspection items to the website 22 and makes determinations with respect to the inspection items on the basis of the contents of a response received from the website 22.

In the present embodiment, the inspection of the website 22 includes various types of inspections. For example, the inspection includes the inspection (diagnosis) of vulnerability of the website 22. The inspection also includes, for example, the inspection of the performance, functions, or others of the website 22.

In the present embodiment, the screen transition setting unit 114 is configured to output a predetermined screen displaying information on the set screen transitions. For example, the screen transition setting unit 114 transmits screen data, control data, and the like of the predetermined screen to the user terminal 30 so that the predetermined screen is outputted on the user terminal 30. For example, the predetermined screen displays information on at least some of the screen transitions, or displays information on one screen included in the screen transitions.

In the present embodiment, the predetermined screen is configured to display a second element included in a first screen included in the set screen transitions, a transition to a third screen in response to selection of the second element not being included in the screen transitions, as an addable element, a new transition in response to selection of the addable element being addable to the screen transitions. For example, the predetermined screen displays the second element such that the second element can be recognized as an addable element.

As described above, the website inspection server 10 according to the present embodiment sets screen transitions for inspecting the website 22 to be inspected, and an element included in a screen included in the screen transitions, a transition in response to selection of the element not being included in the screen transitions, is displayed as an addable element, a new transition in response to selection of the addable element being addable to the screen transitions, on the predetermined screen displaying information on the screen transitions. This allows the user to easily modify the set screen transitions. In this way, the website inspection server 10 assists the user in inspecting the website.

In the present embodiment, the predetermined screen may be configured to display the above addable element in various forms. For example, the predetermined screen displays the addable element such that the addable element is associated with predetermined information indicating that the element is an addable element. For example, the predetermined screen is configured to display a corresponding screen (including a screen capture) in which a predetermined object serving as the predetermined information is placed in the position of the addable element. The predetermined object may consist of any type of object, for example, an object having a box, linear, circular, or any other shape. Such a configuration allows for indication of the addable element using information such as the predetermined object placed on the screen.

In the present embodiment, the screen transition setting unit 114 may be configured to update (modify) the set screen transitions. For example, in response to an instruction with specification of the addable element through the predetermined screen, the screen transition setting unit 114 adds a transition in response to selection of the specified element to the screen transitions. In this case, the screen transition setting unit 114 may be configured to, in response to the addition of the transition in response to the selection of the specified element to the screen transitions, add a further transition to a new screen in response to selection of an element included in the destination screen of the added transition to the screen transitions. Such a configuration allows the user to modify the set screen transitions more easily.

In the present embodiment, the website inspection unit 116 may be configured to, in response to the instruction with specification of the addable element through the predetermined screen, inspect the destination screen of the transition in response to selection of the specified element. Such a configuration allows the user to individually inspect the destination screen of the transition in response to selection of the addable element.

In the present embodiment, the screen transition setting unit 114 may be configured to visit multiple screens of the website 22 by automatic operation of the web browser and to set screen transitions including at least some of these multiple screens. In this case, the screen transition setting unit 114 may be configured to set the screen transitions such that an overlapping screen(s) is eliminated from the visited multiple screens. Whether there is an overlapping screen is determined on the basis of, for example, at least the similarity between two screens. Thus, the screen transition setting unit 114 is able to set screen transitions including some (for example, screens including no overlapping screen, etc.) of the multiple screens visited by automatic operation of the web browser.

Next, a specific example as an aspect of the website inspection server 10 according to the present embodiment having the above functions will be described. In this example, the website inspection server 10 provides a vulnerability inspection service in which the vulnerability of a website is inspected, as an example of the website inspection service.

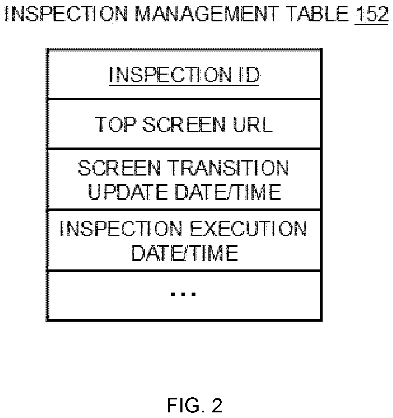

In this example, first, information managed by each table will be described. FIG. 2 illustrates information managed by the inspection management table 152 in this example. The inspection management table 152 in this example manages information on specific inspection cases. Specifically, as shown, the inspection management table 152 manages information such as a "top screen URL", which is the URL of the top screen (top page) serving as the starting point of a specific inspection of a website to be inspected, a "screen transition update date/time", which is the date and time of update of screen transitions, and an "inspection execution date/time," which is the date and time of execution of the specific inspection, such that these pieces of information are associated with an "inspection ID" identifying the specific inspection (case).

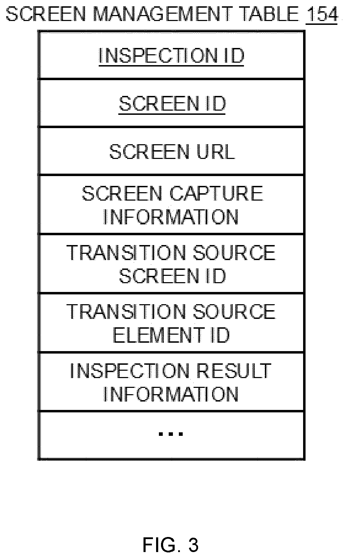

FIG. 3 illustrates information managed by the screen management table 154 in this example. The screen management table 154 in this example manages information on screens included in set screen transitions among the multiple screens of each of websites to be inspected. Specifically, as shown, the screen management table 154 manages information such as a "screen URL", which is the URL of a specific screen of the above website to be inspected, "screen capture information", which is information on a screen capture of the specific screen, a "transition source screen ID" identifying the transition source screen of the specific screen, a "transition source element ID" identifying an element of the transition source screen of the specific screen (an element clicked when making a transition to the specific screen), and "inspection result information", which is information on the inspection results of the specific screen, such that these pieces of information are associated with a combination of the "inspection ID" identifying the above specific inspection, and a "screen ID" identifying the specific screen.

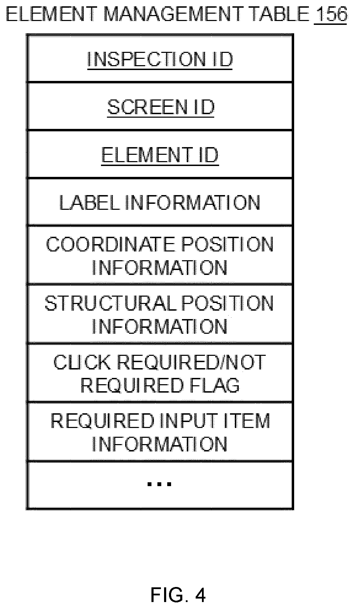

FIG. 4 illustrates information managed by the element management table 156 in this example. The element management table 156 in this example manages information on multiple transition target elements included in the screens (web pages) of each of websites to be inspected. Specifically, as shown, the element management table 156 manages information such as "label information", which is information on the label of a specific element of the above specific screen of the above website to be inspected, "coordinate position information", which is information on the coordinate position on the screen (web page) of the element, "structural position information", which is information on the structural position (DOM information) of the element, a "click required/not required flag", which indicates whether a click of the element is required to make a screen transition, and "required input item information", which is information on an input item required when clicking the element, such that these pieces of information are associated with a combination of the "inspection ID" identifying the above specific inspection, the "screen ID" identifying the above screen, and an "element ID" identifying the element.

The foregoing is the description of the information managed by the respective tables in this example. Next, processes performed by the website inspection server 10, screens outputted on the user terminal 30, and the like in this example will be described.

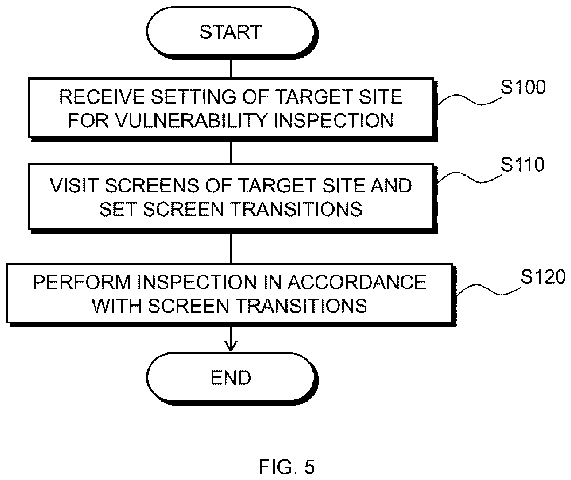

FIG. 5 is a flowchart illustrating a process that the website inspection server 10 performs when inspecting the vulnerability of a website in this example. As shown, first, the server 10 receives the setting of a website to be inspected for vulnerability (step S100). The received setting is a setting inputted through a screen outputted on the user terminal 30.

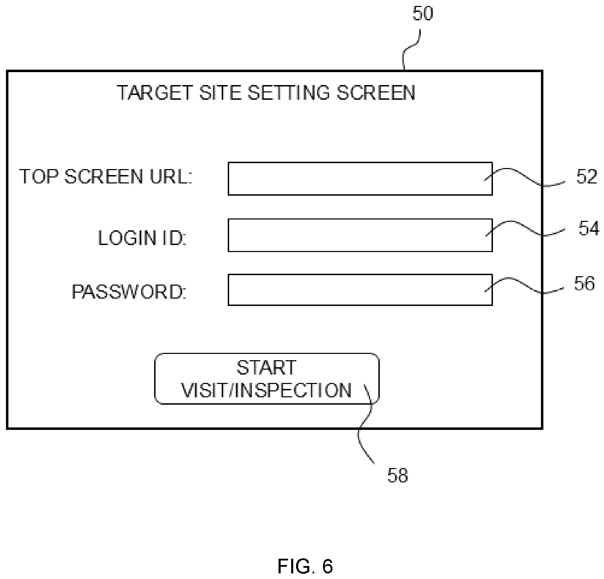

FIG. 6 illustrates a target site setting screen 50 that is outputted on the user terminal 30 and aims to receive the setting of a website to be inspected. As shown, the screen 50 includes a URL input area 52 for inputting the URL of the top screen (top page) of the website to be inspected, a login ID input area 54 for inputting a login ID used to log in to the website, a password ID input area 56 for inputting a password used to log in to the website, and a continue button 58 provided with text "start visit/inspection". As seen above, in this example, the URL of the top screen, the login ID, and the password are received as information on the setting of the website to be inspected.

The continue button 58 is an object for instructing the server 10 to visit screens (set screen transitions) of the website to be inspected and to inspect the screens. Referring back to the flowchart of FIG. 5, when the continue button 58 is selected, the server 10 visits the website to be inspected and sets screen transitions for inspection (step S110).

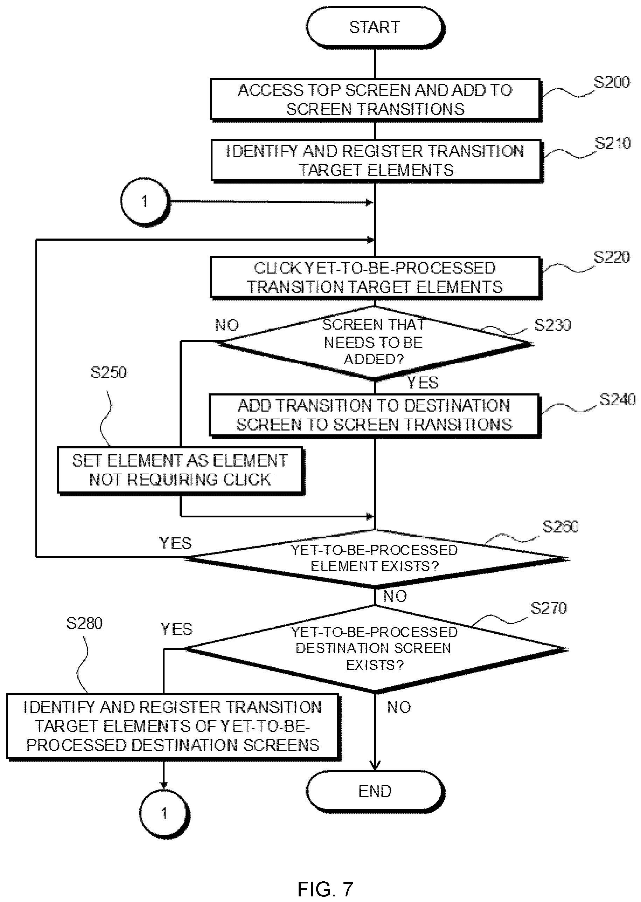

FIG. 7 is a flowchart illustrating a process that the server 10 performs when setting screen transitions to inspect the website. As shown, first, the server 10 accesses the top screen of the website to be inspected and adds the top screen to screen transitions (step S200). Specifically, the server 10 starts the browser and accesses the top screen specified by the URL inputted through the target site setting screen 50. The server 10 then registers information on the top screen in the screen management table 154. Specifically, the server 10 sets the inspection ID, screen ID, screen URL, and screen capture information.

The server 10 then identifies and registers multiple transition target elements included in the top screen (step S210). Specifically, the server 10 identifies screen elements (buttons, images, text, or the like) on which a link, script, or the like is set and registers information on each element in the element management table 156 by setting an inspection ID, a screen ID, an element ID, label information, coordinate position information, structural position information, and a click required/not required flag. At this point, a value indicating that a click is required is set as the click required/not required flag.

After registering the transition target elements in this manner, the server 10 clicks the registered elements (step S220). If the destination screen of a transition in response to a click of a registered element is a screen that needs to be added to the screen transitions (YES in step S230), the server 10 adds the transition to the destination screen to the screen transitions (step S240). Specifically, the server 10 registers information on the transition destination screen in the screen management table 154, that is, sets the inspection ID, screen ID, screen URL, screen capture information, transition source screen ID, and transition source element ID. Note that the server 10 sets the screen ID identifying the top screen, which is the transition source, as the transition source screen ID and sets the element ID identifying the clicked element as the transition source element ID.

In this example, if there is an input item required when clicking a transition target element, a previously prepared input value (including a combination of the login ID and password inputted through the target site setting screen 50) is automatically set. The automatically set input value is registered in the required input item information of the corresponding element in the element management table 156.

On the other hand, if the destination screen of the transition in response to the click is a screen that does not need to be added to the screen transitions (NO in step S230), the server 10 does not add the transition to the screen to the screen transitions and sets the corresponding element as an element not requiring a click (step S250). Specifically, the server 10 sets a value indicating that a click is not required as the click required/not required flag of the corresponding element in the element management table 156.

In this example, it is determined that the following two types screens are screens that do not need to be added to the screen transitions:
(1) the screens of sites outside the website to be inspected; and
(2) a screen(s) that overlaps screens already included in the screen transitions.

With respect to (2), whether two screens overlap each other is determined on the basis of the similarity between these screens in this example. Specifically, when the similarity is equal to or greater than a threshold, it is determined that the two screens overlap each other. The similarity can be calculated using various criteria, for example, can be calculated on the basis of comparisons between the contents, URLs, and URL parameters of the screens (pages).

Then, when, with respect to each of the multiple transition target elements included in the top screen, the server 10 adds a transition to a destination screen in response to a click of the element to the screen transitions or sets the element as an element not requiring a click (NO in step S260), it likewise identifies and registers multiple transition target elements included in each of the screens added to the screen transitions (step S280), as well as adds a transition to a destination screen in response to a click of each element to the screen transitions or sets the element as an element not requiring a click (steps S220 to S260). Such a process is repeatedly performed until a new screen is no longer added to the screen transitions (NO in step S270).

Referring back to the flowchart of FIG. 5, when the screen transitions are set as described above, the server 10 performs a vulnerability inspection in accordance with the set screen transitions (step S120). Specifically, the server 10 starts the web browser, sequentially visits the screens included in the screen transitions in accordance with information managed by the screen management table 154 and element management table 156, and inspects each screen for predetermined vulnerability inspection items. Examples of the vulnerability inspection items include items defined by the OWASP Top 10. The server 10 registers the inspection results in inspection result information of the screen management table 154.

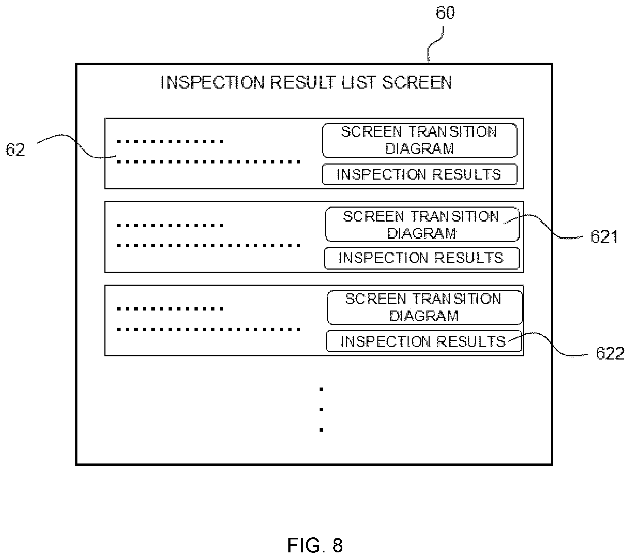

FIG. 8 illustrates an inspection result list screen 60 outputted on the user terminal 30. As shown, one or more specific display areas 62 corresponding to specific inspections (cases) are listed in the up-down direction in the screen 60.

Each specific display area 62 displays information on an inspection (information on the top screen of a website to be inspected, the update date/time of the screen transitions, the inspection execution date/time, etc.). Each specific display area 62 includes a screen transition diagram button 621 and an inspection result button 622 at the right end thereof.

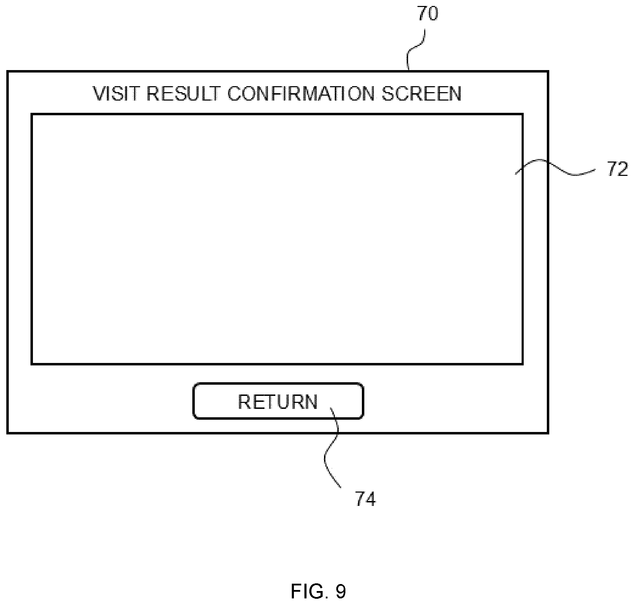

The screen transition diagram button 621 is an object for displaying screen transitions set as the results of visit of multiple screens of the website in a screen transition diagram form. When the button 621 is selected, a visit result confirmation screen 70 illustrated in FIG. 9 is outputted. As shown, the screen 70 includes a screen transition diagram display area 72 displaying a screen transition diagram and a return button 74.

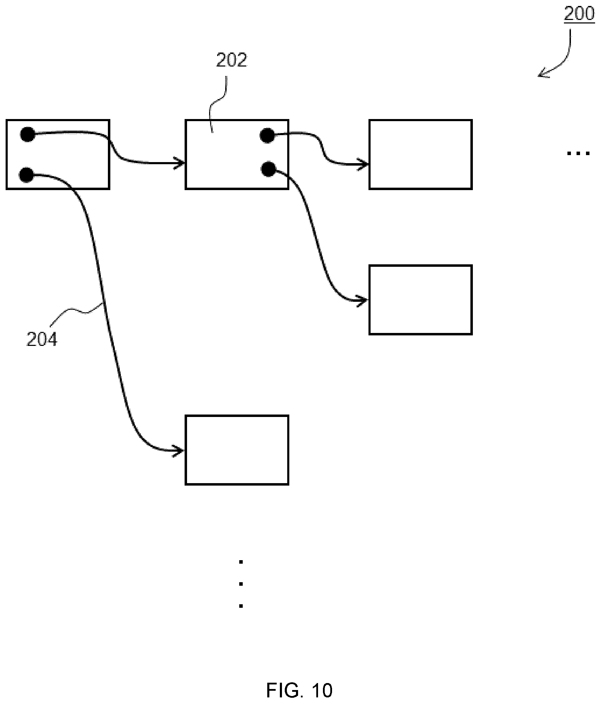

FIG. 10 illustrates a screen transition diagram 200 shown in the screen transition diagram display area 72. As shown, the screen transition diagram 200 includes screen objects 202 corresponding to screens included in the screen transitions and linking objects 204 linking two screen objects 202. Each screen object 202 displays a screen capture of the corresponding screen.

In the screen transition diagram 200, the most left screen object 202 corresponds to the top screen serving as the starting point of the inspection of the website to be inspected. The screen object 202 of the top screen and the screen object 202 of the destination screen of a transition from the top screen are linked by a linking object 204. Likewise, two screen objects 202 having a transition source-transition destination relationship are linked by a linking object 204. Such relationships between screens included in the screen transitions are managed in the screen management table 154.

The circular left end of each linking object 204 is located in the position of a transition source element (an element clicked when making a transition) of the screen object 202 of the transition source screen.

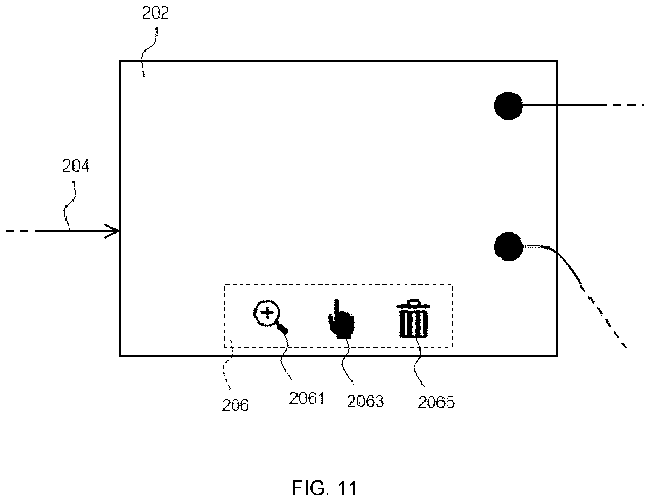

FIG. 11 illustrates details of a screen object 202. As shown, the screen object 202 has a menu area 206 at the lower end thereof. A zoom-in menu icon 2061, a revisit menu icon 2063, and a deletion menu icon 2065 are placed in the area 206. The zoom-in menu icon 2061 is an object for zooming in the screen object 202, and the deletion menu icon 2065 is an object for deleting a screen corresponding to the screen object 202 from the screen transitions.

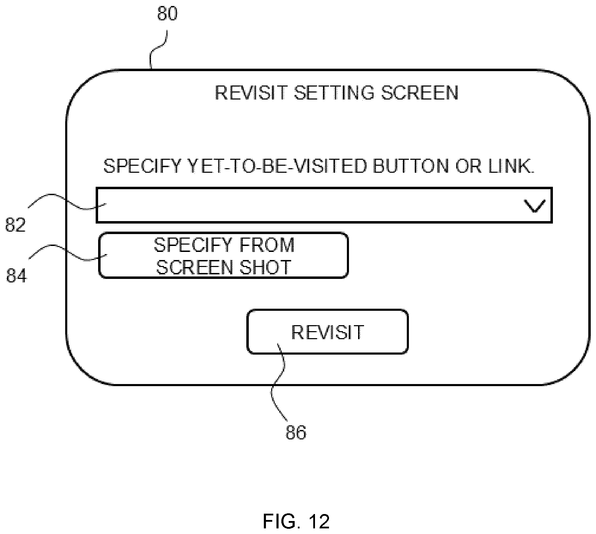

The revisit menu icon 2063 is an object for adding a new transition to the screen transitions. When the revisit menu icon 2063 is selected, a revisit setting screen 80 (a predetermined screen) illustrated in FIG. 12 is outputted. As shown, the screen 80 includes a revisit element specification area 82 for newly specifying a transition target element to be clicked (revisited), a screen shot specification button 84 provided with text "Specify from screen shot", and a revisit button 86. The revisit element specification area 82 is in a drop-down list form and is configured to allow the user to select one element from (yet-to-be-visited) elements (managed in the element management table 156) set as elements not requiring a click among transition target elements included in the corresponding screen (the screen corresponding to the screen object 202 whose revisit menu icon 2063 has been selected). In the area 82, each transition target element is identified (displayed) by label information and structural position information (DOM information).

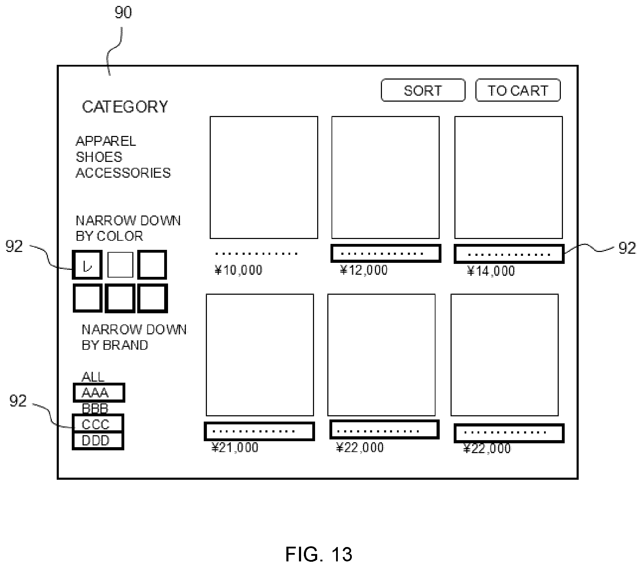

The screen shot specification button 84 is an object for newly selecting an element to be clicked from a screen capture (screen shot) of the corresponding screen. When the button 84 is selected, a screen shot screen 90 (a predetermined screen) illustrated in FIG. 13 is outputted. The screen 90 displays the screen capture of the corresponding screen over its entire screen area.

Multiple yet-to-be-visited element boxes 92 (predetermined objects) are placed in the screen shot screen 90 illustrated in FIG. 13. The boxes 92 each have a non-filled, (transparent) rectangular appearance and are placed in the positions of the elements set as elements not requiring a click among the multiple transition target elements included in the corresponding screen. The positions on the screen of these elements are managed in the coordinate position information of the element management table 156. The yet-to-be-visited element boxes 92 as described above allow the user to visually easily grasp the yet-to-be-visited elements. Note that objects having any other appearance may be placed in the positions of the elements set as elements not requiring a click in place of the yet-to-be-visited element boxes 92.

In another example of the present embodiment, a screen corresponding to the screen shot screen 90 may display a screen (web page) rendered by reproducing HTML data, in place of the screen capture. In this case, the positions of the yet-to-be-visited element boxes 92 (the elements set as elements not requiring a click) in this screen are identified by the structural position information in the element management table 156.

When any yet-to-be-visited element box 92 is selected in the screen shot screen 90, an element corresponding to the selected box 92 is set in the revisit element specification area 82 of the revisit setting screen 80. Then, when the revisit button 86 of the screen 80 is selected, a new transition to a destination screen in response to a click of the transition target element set in the area 82 is added to the screen transitions. Then, with respect to this destination screen, the server 10 repeatedly identifies and registers transition target elements and adds a transition in response to a click of each transition target element to the screen transitions or sets the element as an element not requiring a click (see steps S220 to S280 of the flowchart illustrated in FIG. 7). As seen above, the user is able to easily add a new transition to the set screen transitions through the revisit setting screen 80. The user is also able to individually request a reinspection in accordance with the modified screen transitions.

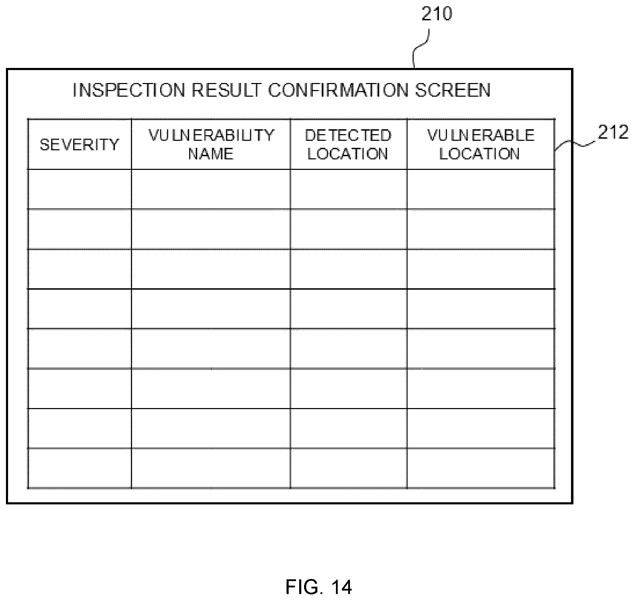

Referring back to the inspection result list screen 60 of FIG. 8, the inspection result button 622 is an object for viewing the inspection results. When the button 622 is selected, an inspection result confirmation screen 210 illustrated in FIG. 14 is outputted. As shown, the screen 210 includes a listing area 212 listing the results of the vulnerability inspection. The area 212 lists the results (severity, vulnerability name, detected location, vulnerable location, and the like) of the vulnerability inspection of each screen. These pieces of information are managed in the inspection result information of the screen management table 154.

In the above example, the transition target elements set as elements not requiring a click are shown in the revisit element specification area 82 of the revisit setting screen 80 so as to be selectable in a drop-down list form and are also shown in the screen shot screen 90 so as to be provided with the yet-to-be-visited element boxes 92. However, the form in which the transition target elements are displayed is not limited to that described above. In another example of the present embodiment, transition target elements set as elements not requiring a click may be displayed as addable elements, transitions in response to clicks of the addable elements being addable to the screen transitions, in various forms (such that the addable elements are recognized).

While, in the above example, a new transition is added to the screen transitions through the revisit setting screen 80, the destination screen of a new transition may be individually inspected (without adding the new screen to the screen transitions) in place of or in addition to the foregoing.

In the above example, the website inspection server 10 is configured to provide the vulnerability inspection service in which the vulnerability of a website is inspected. In another example of the present embodiment, the website inspection server 10 may inspect a website from various aspects other than vulnerability, for example, may inspect a website for performance, function, or the like.

The website inspection server 10 according to the present embodiment described above sets screen transitions for inspecting the website 22 to be inspected, and elements included in a screen included in the screen transitions, transitions in response to selection of the elements not being included in the screen transitions, are displayed as addable elements, new transitions in response to selection of the addable elements being addable to the screen transitions, on the predetermined screen for displaying information on the screen transitions (for example, the revisit setting screen 80 or screen shot screen 90) (for example, the elements are displayed such that the user can select any from the elements in a drop-down list form in the revisit element specification area 82, or displayed in the screen shot screen 90 such that the elements are provided with the yet-to-be-visited element boxes 92). This allows the user to easily modify the set screen transitions. In this way, the website inspection server 10 assists the user in inspecting the website.

In another embodiment of the present invention, some or all of the functions of the website inspection server 10 according to the above embodiment may be performed by collaboration of the website inspection server 10 and user terminal 30 or by the user terminal 30.

The processes and procedures described in the present specification may be performed by software, hardware, or any combination thereof other than those explicitly described. For example, the processes and procedures described in the present specification may be performed by implementing logic corresponding to the processes and procedures in a medium such as an integrated circuit, volatile memory, non-volatile memory, or magnetic disk. The processes and procedures described in the present specification may also be implemented as a computer program corresponding to those and performed by various types of computers.

Even when it is stated that the processes and procedures described in the present specification are performed by a single device, software, component, or module, those processes or procedures may be performed by multiple devices, multiple types of software, multiple components, and/or multiple modules. The software and hardware components described in the present specification may be implemented by integrating them into less components or by decomposing them into more components.

When the components of the invention are each described in a singular or plural form in the present specification or even when each component is described without specifying a singular form or plural form, the number of the component may be singular or plural unless the number should be interpreted otherwise in the context.

## Claims

1. A system for inspecting a website, the system comprising one or more computer processors,
wherein the one or more computer processors perform:
a step of setting screen transitions for inspecting a target website, the screen transitions including a transition to a second screen in response to selection of a first element included in a first screen;
a step of inspecting the target website in accordance with the screen transitions; and
a step of outputting a predetermined screen displaying information on the screen transitions, and
wherein the predetermined screen displays a second element included in the first screen, a transition to a third screen in response to selection of the second element not being included in the screen transitions, as an addable element, a new transition in response to selection of the addable element being addable to the screen transitions.

2. The system of claim 1, wherein the predetermined screen displays the second element such that the second element is associated with predetermined information indicating that the second element is the addable element.

3. The system of claim 2, wherein the predetermined screen displays the first screen in which a predetermined object serving as the predetermined information is placed in a position of the second element.

4. The system of claim 1, wherein the one or more computer processors further perform a step of adding the transition to the third screen in response to the selection of the second element to the screen transitions, in response to an instruction with specification of the second element through the predetermined screen.

5. The system of claim 4, wherein the one or more computer processors further perform a step of adding a transition to a fourth screen in response to selection of a third element included in the third screen to the screen transitions, in response to the addition of the transition to the third screen in response to the selection of the second element to the screen transitions.

6. The system of claim 1, wherein the one or more computer processors further perform a step of inspecting the third screen in response to an instruction with specification of the second element through the predetermined screen.

7. The system of claim 1, wherein the inspecting step comprises inspecting vulnerability of the target website.

8. The system of claim 1, wherein the step of setting the screen transitions comprises visiting a plurality of screens of the target website by automatic operation of a web browser and setting the screen transitions including at least some of the screens.

9. The system of claim 8, wherein the step of setting the screen transitions comprises setting the screen transitions such that an overlapping screen is eliminated from the screens.

10. The system of claim 9, wherein the step of setting the screen transitions comprises determining whether there is an overlapping screen, on the basis of at least similarity between two screens.

11. A method for inspecting a website, the method being performed by one or more computers, the method comprising:
a step of setting screen transitions for inspecting a target website, the screen transitions including a transition to a second screen in response to selection of a first element included in a first screen;
a step of inspecting the target website in accordance with the screen transitions; and
a step of outputting a predetermined screen displaying information on the screen transitions,
wherein the predetermined screen displays a second element included in the first screen, a transition to a third screen in response to selection of the second element not being included in the screen transitions, as an addable element, a new transition in response to selection of the addable element being addable to the screen transitions.

12. A program for inspecting a website, the program causing one or more computers to perform:
a step of setting screen transitions for inspecting a target website, the screen transitions including a transition to a second screen in response to selection of a first element included in a first screen;
a step of inspecting the target website in accordance with the screen transitions; and
a step of outputting a predetermined screen displaying information on the screen transitions, wherein
the predetermined screen displays a second element included in the first screen, a transition to a third screen in response to selection of the second element not being included in the screen transitions, as an addable element, a new transition in response to selection of the addable element being addable to the screen transitions.
